# EUROPÄISCHE PATENTANMELDUNG

(11) **EP 4 112 239 A1**
(43) Veröffentlichungstag der Anmeldung: **04.01.2023**
(21) Anmeldenummer: 21182869.4
(22) Anmeldetag: 30.06.2021
(51) Int. Cl.: B25J 9/16

(54) **AUTOMATISIERTE KALIBRIERUNG EINER FERTIGUNGSMASCHINE**

(71) Anmelder: Siemens Aktiengesellschaft, 80333 München (DE)
(72) Erfinder: Hamm, Carsten, 91330 Eggolsheim (DE)

(57) **Zusammenfassung**

Bei einer Fertigungsmaschine mit wenigstens einem lagegeregelten Antrieb bzw. wenigstens einer lagegeregelten Achse, insbesondere einem Roboter, soll die Kalibrierung vereinfacht werden.

Hierzu werden ein Fertigungsmaschinensystem sowie ein Verfahren zum Kalibrieren einer Fertigungsmaschine eines Fertigungsmaschinensystems vorgeschlagen, wobei mittels einer von dem Fertigungsmaschinensystem umfassten Steuereinrichtung folgende Schritte ausgeführt werden:
- Ermitteln einer zur Bewegung eines Endeffektors vorgesehenen Achse der Fertigungsmaschine,
- Ermitteln eines Verfahrbereiches zur Kalibrierung für die ermittelte Achse,
- Verfahren der Achse entlang des ermittelten Verfahrbereiches zur Kalibrierung,
- Ermitteln und Analysieren einer Bahn wenigstens eines Punktes (P, TCP), der einem durch das Verfahren der Achse bewegten Maschinenelement zugeordnet ist,
- Korrigieren eines Modell-Parameters für das Maschinenelement in Abhängigkeit eines Ergebnisses der Analyse für ein in der Steuerung hinterlegtes Modell der Fertigungsmaschine.

## Beschreibung

Die Erfindung betrifft ein Fertigungsmaschinensystem, umfassend eine Fertigungsmaschine, aufweisend wenigstens einen ersten lagegeregelten Antrieb, durch den wenigstens ein erstes Maschinenelement relativ zu einem weiteren Maschinenelement bezüglich einer Achse verstellbar ist, eine Steuereinrichtung zum Steuern des lagegeregelten Antriebs zum Bewegen des ersten Maschinenelements relativ zu dem weiteren Maschinenelement sowie ein in der Steuereinrichtung hinterlegtes Modell des ersten Maschinenelements, welches wenigstens einen Modell-Parameter des ersten Maschinenelements umfasst.

Ferner betrifft die Erfindung eine Fertigungsmaschine sowie eine Steuereinrichtung eines derartigen Fertigungsmaschinensystems.

Weiterhin betrifft die Erfindung ein Verfahren zum Kalibrieren eines derartigen Fertigungsmaschinensystems.

Darüber hinaus betrifft die Erfindung eine Kalibrier-Software zur Durchführung des oben genannten Verfahrens.

Unter einer Fertigungsmaschine versteht der Fachmann eine zum Zweck einer automatisierten Fertigung eingesetzte Maschine. Darunter fallen insbesondere Produktionsmaschinen, Werkzeugmaschinen oder Roboter. Eine im Zusammenhang mit der Erfindung verwendete Fertigungsmaschine umfasst zumindest eine lagegeregelte Achse, so dass mittels eines der Achse zugeordneten, legegeregelten Antriebs wenigstens ein erstes, direkt mit dem Antrieb verbundenes Maschinenelement relativ zu einem zweiten (weiteren) Maschinenelement der Fertigungsmaschine verstellbar ist.

Vorzugsweise umfasst eine Fertigungsmaschine eines erfindungsgemäßen Fertigungsmaschinensystems, z.B. eine Werkzeugmaschine oder ein Roboter, mehr als eine, insbesondere wenigstens fünf legegeregelte Achsen, mittels der ein Endeffektor oder ein Werkzeug im Raum positioniert und orientiert werden kann.

Das Fertigungsmaschinensystem umfasst neben der Fertigungsmaschine eine damit verbundene Steuereinrichtung, die für die Lageregelung der Achse gemäß einem Programm (Steuerprogramm) sorgt.

Werkzeugmaschinen oder Roboter werden heutzutage beispielsweise mit Hilfe einer Steuereinrichtung in Form einer CNC-Steuerung gesteuert. Dabei "steuert" die Steuereinrichtung anhand eines Teileprogramms die Bewegungen von Maschinenelementen und damit die Bewegungen eines Werkzeuges, welches beispielsweise über eine Werkzeughaltevorrichtung in die Maschine eingebracht wird, relativ zu einem Werkstück, welches ebenfalls in die Maschine eingebracht wird. Dabei ist dem Fachmann klar, dass es sich bei dem Begriff "steuern" um den üblichen Sprachgebrauch und nicht um "steuern" im Sinne der Regelungstechnik handelt. "Steuern" meint hier vor allem die Lageregelung von Achsen, wohinter sich Regelungsvorgänge im Sinne der Regelungstechnik verbergen.

Das Teileprogramm setzt sich dabei zumindest überwiegend aus Steuerbefehlen zusammen, die von der Steuereinrichtung eingelesen und interpretiert werden. Entsprechend den Steuerbefehlen steuert die Steuereinrichtung die Bewegungen der Maschinenelemente der Werkzeugmaschine und damit die Bewegung des Werkzeugs relativ zu dem Werkstück.

Zur Erstellung eines Teileprogramms werden dabei von einem CAM-System (Computer Aided Manufacturing) vorzugsweise in einem standardisierten Datenformat Bewegungsinformationen über durchzuführende Bewegungen des Werkzeugs erzeugt und von einem nachgeschalteten Postprozessor eingelesen. Der Postprozessor erzeugt anhand der vom CAM-System erzeugten Bewegungsinformationen, den Kinematik- und Maschinendaten der Werkzeugmaschine sowie dem Befehlssatz der CNC-Steuerung und dem Befehlssatz der PLC-Steuerung, ein für die jeweilige konkrete Werkzeugmaschine auf denen der Bearbeitungsvorgang stattfinden soll angepasstes Teileprogramm in Form von auf die konkrete Steuereinrichtung der Werkzeugmaschine angepassten Steuerbefehlen. Solchermaßen werden vom Postprozessor die vom CAM-System vorzugsweise in einem standardisierten Datenformat erzeugten Bewegungsinformationen in Steuerbefehle, die von der Steuereinrichtung eingelesen werden können und auf die jeweilige Steuereinrichtung angepasst sind, umgesetzt.

Der Postprozessor berücksichtigt dabei neben dem konkret verfügbaren CNC-Befehlssatz die konkreten maschinenspezifischen Gegebenheiten der Werkzeugmaschine, wie z.B. Kinematik, geometrische Größenverhältnisse, maximale Verfahrbereiche der Antriebsachsen und Maximalgeschwindigkeiten der Maschinenelemente. Diese Daten liegen in Form von Maschinendaten vor. Weiterhin werden vom Postprozessor bei der Erzeugung der Steuerbefehle maschinenspezifische PLC-Funktionalitäten (Programmable Logic Control), wie z.B. Schmierung, Werkzeugwechsel, Türverriegelung etc. berücksichtigt, wobei die konkret verfügbaren PLC-Funktionalitäten in Form von PLC-Befehlssätzen dem Postprozessor zur Verfügung stehen.

Damit die Fertigungsmaschine eine vorgegebene Bewegung sehr genau ausführen kann, ist eine Kalibrierung notwendig.

Die Kinematik einer Fertigungsmaschine, insbesondere einer Werkzeugmaschine bzw. eines Roboters, beschreibt die Ausführung und Organisation der bewegten Elemente. Durch sie liegt fest, wie sich Achsbewegungen zur Gesamtbewegung zusammensetzen.

Die Beschreibung der Kinematik enthält geometrische Parameter (Längen, Winkel etc.). Aufgrund von Fertigungs- und Montagetoleranzen entsprechen die realen Werte nicht exakt den Nennwerten aus der Konstruktion.

Kalibrierung bezeichnet das Ermitteln der verschiedenen Parameter der Mechanik der realen Fertigungsmaschine, um ein vollständiges und genaues kinematisches Modell der Maschine zu erhalten. Die Kalibrierung kann die vorhandenen Ungenauigkeiten des Modells der Fertigungsmaschine reduzieren bzw. minimieren.

Während der Kalibrierung einer Kinematik werden demnach die tatsächlichen geometrischen Abmessungen ermittelt. Dies ist heute ein aufwändiger und teurer Schritt.

Im einfachsten Fall wird die Maschine unkalibriert betrieben. Die Steuerung der Bewegungen wird mit Nennwerten von in der Steuerung hinterlegten Modell-Parametern der Maschine durchgeführt und ist damit ungenau.

Es gibt eine Vielzahl von Anbietern und Vorgehen zur Identifikation der Modell-Parameter durch verschiedene Messverfahren und Sensorsysteme. Das typische Kalibrierverfahren nach dem Stand der Technik bestimmt Längenabweichungen, Nulllagenfehler, Achsenschiefstände etc. durch die Auswertung einer Vielzahl von angefahrenen Positionen bzw. Posen und großen Gleichungssystemen mit allen Parametern.

Aus der EP0353585A2 ist ein Verfahren zur Kalibrierung eines Roboters bekannt, wobei nacheinander infolge eines Programms oder durch manuelle Vorgaben bzw. manuelle Steuerung des Roboters nacheinander eine Vielzahl an Referenzpositionen angefahren werden, die Achswinkel der Maschinenachsen ausgelesen und ausgewertet werden und anhand der Referenzpositionen in Verbindung mit den ermittelten Achswinkeln Korrekturwerte für den Roboter, d.h. für dessen Modell-Parameter, bestimmt werden.

Eine Aufgabe der vorliegenden Erfindung ist es, die Kalibrierung einer Fertigungsmaschine mit wenigstens einem lagegeregelten Antrieb bzw. wenigstens einer lagegeregelten Achse zu vereinfachen.

Diese Aufgabe wird gelöst durch ein Fertigungssystem nach Anspruch 1, das heißt ein Fertigungsmaschinensystem, umfassend:
- eine Fertigungsmaschine, aufweisend wenigstens einen ersten lagegeregelten Antrieb, durch den wenigstens ein erstes (direkt mit dem Antrieb verbundenes) Maschinenelement relativ zu einem weiteren Maschinenelement bezüglich einer Achse verstellbar ist,
- eine Steuereinrichtung zum Steuern des lagegeregelten Antriebs zum Bewegen des ersten Maschinenelements relativ zu dem weiteren Maschinenelement,
- ein in der Steuereinrichtung hinterlegtes Modell des ersten Maschinenelements, welches wenigstens einen Modell-Parameter des ersten Maschinenelements umfasst,
- Messmittel zum Bestimmen einer Bahn, die ein bestimmter, dem ersten Maschinenelement zugeordneter Punkt während einer Bewegung des ersten Maschinenelements beschreibt,
- Analysemittel zum Analysieren der bestimmten Bahn,
- Korrekturmittel zum Korrigieren des Modell-Parameters anhand des Analyse-Ergebnisses.

Ferner wird die Aufgabe gelöst durch eine Fertigungsmaschine für ein derartiges Fertigungsmaschinensystem.

Weiterhin wird die Aufgabe gelöst durch eine Steuereinrichtung für ein derartiges Fertigungsmaschinensystem.

Weiterhin wird die Aufgabe gelöst durch ein Verfahren zum Kalibrieren eines Fertigungsmaschinensystems nach Anspruch 13, das heißt ein Verfahren zum Kalibrieren einer Fertigungsmaschine eines Fertigungsmaschinensystems, wobei mittels einer von dem Fertigungsmaschinensystem umfassten Steuereinrichtung folgende Schritte ausgeführt werden:
- Ermitteln einer zur Bewegung eines Endeffektors vorgesehenen Achse der Fertigungsmaschine,
- Ermitteln eines Verfahrbereiches zur Kalibrierung für die ermittelte Achse,
- Verfahren der Achse entlang des ermittelten Verfahrbereiches zur Kalibrierung,
- Ermitteln und Analysieren einer Bahn wenigstens eines Punktes, der einem durch das Verfahren der Achse bewegten Maschinenelement zugeordnet ist,
- Korrigieren eines Modell-Parameters für das Maschinenelement in Abhängigkeit eines Ergebnisses der Analyse für ein in der Steuerung hinterlegtes Modell der Fertigungsmaschine.

Weiterhin wird die Aufgabe gelöst durch eine Kalibrier-Software zur Durchführung eines derartigen Verfahrens.

Im Unterschied zu bisherigen Kalibrierverfahren, bei denen Längenabweichungen, Nulllagenfehler, Achsenschiefstände etc. durch die Auswertung einer Vielzahl von angefahrenen Positionen bzw. Posen in Verbindung mit großen Gleichungssystemen mit einer Vielzahl an Parametern bestimmt werden, wird bei der erfindungsgemäßen Vorgehensweise im einfachsten Fall jede Maschinenachse zur Kalibrierung genau einmal bewegt. Das Kalibrierverfahren kann daher innerhalb kurzer Zeit durchgeführt werden und führt dennoch zu sehr guten Ergebnissen. Auch der damit verbundene Rechenaufwand hält sich gegenüber bisherigen Verfahren in Grenzen.

Eine erfindungsgemäße Fertigungsmaschine kann eine oder mehrere Linearachsen umfassen. Bei einer mittels einer linearen Achse ausgeführten Bewegung handelt es sich zumindest näherungsweise um eine lineare Bewegung und die beschriebene Bahn entspricht idealerweise einer Geraden.

Weiterhin kann eine erfindungsgemäße Fertigungsmaschinen auch eine oder mehrere Rundachsen umfassen und die damit jeweils ausgeführte Bewegung entspricht zumindest näherungsweise einer Kreisbewegung bzw. die beschriebene Bahn einer Kreisbahn.

Die Erfindung kann somit sowohl bei Fertigungsmaschinen die Linearachsen umfassen als auch bei Fertigungsmaschinen die Rundachsen umfassen als auch bei Fertigungsmaschinen mit einer Kombination aus Linear- und Rundachsen angewendet werden.

Bei den im Zusammenhang mit der Erfindung relevanten Achsen handelt es sich insbesondere um die Achsen der Fertigungsmaschine, die an der Bewegung eines Endeffektors bzw. eines Werkzeuges zur Bearbeitung oder Herstellung eines Werkstücks beteiligt sind. Hilfsantriebe bzw. Hilfsachsen, z.B. zum Bewegen einer Schutztür, sind davon ausgenommen.

Unter einem Endeffektor wird das Maschinenelement der Fertigungsmaschine verstanden, mit dem der für die Fertigungsmaschine vorgesehene Effekt erreicht wird. Dies könnte beispielsweise bei einer Werkzeugmaschine ein Werkzeug oder bei einem Roboter ein Greifer sein. Allgemein wird in der Robotik als Endeffektor das letzte Element der kinematischen Kette des Roboters bezeichnet.

Als Messmittel zum Erfassen der Bahn wird im Zusammenhang mit der Erfindung vorzugsweise ein Tracking-Interferometer, insbesondere ein Laser-Tracker verwendet. Damit kann die betreffende Bahn hochgenau erfasst werden. Vorteilhaft wird der Laser-Tracker im Randbereich des Arbeitsraums der betreffenden Maschine installiert und es werden Daten im dreidimensionalen Raum erzeugt.

Für die Messung der Bahn kann ein Maschinenelement der Fertigungsmaschine eigens mit einer für diesen Zweck vorgesehenen Markierung versehen sein, z.B. ein außen an einem Maschinenelement aufgemalter Punkt oder ein außen an einem Maschinenelement angebrachter Markierstift mit einem Spitzen Ende. Es ist jedoch auch möglich, dass ein ohnehin an der Maschine vorhandener markanter Punkt als der Punkt gewählt wird, dessen Bahn gemäß der Erfindung aufgezeichnet wird. Ein derartiger markanter Punkt kann zum Beispiel ein Eckpunkt eines Maschinenelements, ein Schraubenkopf, ein Wellen-Ende oder dergleichen sein. Wesentlich dabei ist lediglich, dass der markante Punkt während des Verfahrens der Achse eindeutig erkannt und während der Bewegung verfolgt werden kann. Darüber hinaus ist es auch möglich, dass der betreffende Punkt zwar dem durch das Verfahren der Achse bewegten Maschinenelement zugeordnet ist, jedoch ohne selbst Teil dieses Maschinenelements zu sein. Beispielsweise könnte an dem Maschinenelement ein Laser befestigt sein, der den betreffenden Punkt auf eine Projektionsfläche außerhalb des Maschinenelements projiziert. Wesentlich ist lediglich, dass der betreffende Punkt die Verfahrbewegung der betreffenden Achse bzw. des betreffenden Maschinenelements widerspiegelt.

Bei Fertigungsmaschinen mit verstellbaren (verfahrbaren) Achsen ist es üblich, dass für diese Achsen ein maximaler Verfahrbereich (nachfolgend auch maximaler Verfahrweg genannt) festgelegt wird. Dieser ist in der Regel durch die Maschinen-Mechanik fest vorgegeben und z.B. durch mechanische oder elektronische Endanschläge bestimmt. Durch die Endanschläge sind eine minimale Achsposition bzw. ein minimaler Achswinkel und eine maximale Achsposition bzw. ein maximaler Achswinkel für die betreffende Achse bestimmt, wodurch auch der maximale Verfahrweg entsprechend vorgegeben ist. Endlos drehbare Rundachsen, die keine Endanschläge aufweisen, haben somit einen maximalen Verfahrbereich von 0° bis 360°.

Die minimalen und maximalen Achspositionen bzw. Achswinkel der verstellbaren Achsen werden in üblicher Weise bei der Inbetriebnahme der Fertigungsmaschine festgelegt und in der Steuereinrichtung hinterlegt.

Neben dem maximalen Verfahrbereich können Achsen einer erfindungsgemäßen Fertigungsmaschine auch einen speziellen "Verfahrbereich zur Kalibrierung" aufweisen. Dieser ist für die jeweilige Achse logischerweise kleiner oder gleich dem maximalen Verfahrbereich. Sofern für eine bestimmte Achse für die Kalibrierung ein anderer als der maximale Verfahrbereich vorgegeben werden soll, so kann auch dafür das Minimum und Maximum bereits bei der Inbetriebnahme festgelegt und in der Steuereinrichtung gespeichert werden. Die Grenzwerte sind insbesondere so zu wählen, dass beim Verfahren der betreffenden Achse in dem so definierten, maximalen Verfahrbereich zur Kalibrierung Kollisionen von Teilen der Fertigungsmaschine ausgeschlossen werden können.

Bei bestimmten Maschinen kann es ausreichen, wenn eine betreffende Achse zum Aufzeichnen der Bahn lediglich über einen Teilbereich ihres maximal möglichen Verfahrbereiches bzw. ihres maximalen für die Kalibrierung vorgegebenen Verfahrbereiches verfahren wird.

Es genügen zwar mitunter bereits relativ kurze Verfahrwege um bestimmte Ungenauigkeiten im Modell der Maschine zu erkennen und entsprechende Maschinen-Parameter nachzujustieren, bessere Ergebnisse werden jedoch in der Regel erzielt, wenn die betreffende Achse über einen größeren Bereich, insbesondere den maximalen Verfahrbereich bzw. den maximalen für die Kalibrierung vorgegebenen Verfahrbereich verfahren wird.

Vorzugsweise sieht die Erfindung daher vor, dass die betreffende Achse zum Aufzeichnen der Bahn zumindest über einen wesentlichen Teil ihres maximalen Verfahrbereiches, insbesondere über ihren maximalen Verfahrbereich bzw. den maximalen für die Kalibrierung vorgesehenen Verfahrbereich verfahren wird. Dabei nimmt die Achse beispielsweise zunächst die minimale Achsposition bzw. den minimalen Achsenwinkel ein und wird anschließend - während die resultierende Bahn aufgezeichnet wird - soweit verfahren, bis die maximale Achsposition bzw. der maximale Achsenwinkel erreicht ist. Bei einer endlos drehbaren Rundachse ist dies beispielsweise der Bereich von 0° bis 360°.

Selbstverständlich ist es im Zusammenhang mit der Erfindung auch möglich, die Achse in umgekehrter Bewegungsrichtung zu verfahren. So kann die Achse ausgehend von einer maximalen Achsposition bzw. einem maximalen Achsenwinkel in Richtung der minimalen Achsposition bzw. des minimalen Achswinkels verfahren werden.

Weiterhin ist es zur Erhöhung der Genauigkeit auch möglich, eine betreffende Achse mehrfach, insbesondere sowohl in positiver als auch in negativer Bewegungsrichtung zu bewegen und die resultierenden Bahnen zu erfassen. Aus den gewonnenen Daten kann so z.B. eine gemittelte Bahn bestimmt werden, bei der bestimmte Fehler, beispielsweise Messfehler, ausgemittelt sind.

Fertigungsmaschinen, insbesondere Werkzeugmaschinen oder Roboter, umfassen gewöhnlich mehrere Achsen und damit mehrere Antriebe, die jeweils durch wenigstens ein Maschinenelement voneinander getrennt sind, wobei die Antriebe und Maschinenelemente eine kinematische Kette bilden.

So umfasst beispielsweise ein Industrieroboter häufig eine ortsfeste oder entlang einer Linearachse bewegbare Basis, auf der ein in der Regel um eine vertikale (erste) Achse schwenkbarer Roboterarm befestigt ist. Der Roboterarm selbst besteht aus einer Reihe von starren (Arm-) Gliedern, die miteinander durch Drehgelenke verbunden sind, wobei die Gelenke durch gesteuerte Antriebe verstellt werden können. Die Gelenke und Antriebe bilden die (Rund-) Achsen des Roboters. Das freie Ende dieser "Gliederkette" ist dadurch frei beweglich und kann mit einem Endeffektor, insbesondere einem Werkzeug oder Greifer, zur Durchführung von Fertigungsarbeiten bestückt werden.

Die Anordnung der Antriebe in einer kinematischen Kette bewirkt, dass beim Verstellen eines bestimmten Antriebs der Maschine in der kinematischen Kette (von der Basis aus betrachtet) nachfolgende Antriebe ihre Lage bzw. Position ändern, obwohl sie selbst nicht verstellt (bewegt bzw. angetrieben) werden.

Vorteilhaft wird während des Verstellens eines Antriebs die Bahn eines durch den Antrieb bewegten Maschinenelements, z.B. eines Armglieds, für einen Punkt des Maschinenelements erfasst, der zumindest näherungsweise auf einer Achse eines in der kinematischen Kette nachfolgenden Antriebs liegt. Ein solcher Punkt kann beispielsweise durch eine bestimmte Ecke bzw. Kante, eine Schraube, ein Wellenende oder ein sonstiges markantes, an der Maschine ohnehin vorhandenes Teil des Maschinenelements bestimmt sein. Alternativ kann eine entsprechende Markierung auch eigens für den genannten Zweck an einer geeigneten Stelle der Maschine auf- bzw. angebracht worden sein.

Darüber hinaus ist es auch möglich, dass nicht nur die Bahn eines Punktes, sondern gleichzeitig die Bahnen mehrerer Punkte erfasst und aufgezeichnet werden, während die Achse verstellt wird. Dadurch können insbesondere Verwindungen in der Mechanik der Maschine besser erfasst werden, insbesondere wenn die betrachteten Punkte an gegenüberliegenden Seiten eines Maschinenelements, z.B. eines Armgliedes liegen.

Bei der erfindungsgemäßen Kalibrierung werden die dafür vorgesehenen Maschinenachsen vorzugsweise einzeln nacheinander verfahren. Es ist jedoch auch möglich, mehrere Achsen gleichzeitig zu verfahren und für einen oder mehrere dadurch bewegte Punkte der Maschine deren Bewegungsbahnen zu erfassen. Der Kalibriervorgang wird dadurch beschleunigt. Allerdings handelt es sich bei den Bewegungsbahnen dann nicht mehr nur um Geraden und Kreise, sondern es können sich auch kompliziertere geometrische Gebilde, z.B. Zykloide beim geleichzeitigen Verfahren von zwei Rundachsen, ergeben. Dies erhöht jedoch in der Regel den Rechenaufwand bei der nachfolgenden Auswertung.

In Bezug auf die Kalibrierung der Maschine und die damit erreichbare höhere Genauigkeit der beabsichtigten Bewegungen ist insbesondere die Lage und Orientierung der einzelnen Achsen relativ zueinander von besonderer Bedeutung. Das heißt, die Achsabstände und Orientierungen zwischen den Achsen müssen besonders genau erfasst werden. Dies lässt sich dadurch erreichen, dass die Punkte, deren Bahnen aufgezeichnet werden, auf oder zumindest nahe bei den Achsen der Maschine liegen.

Weiterhin ist für die Genauigkeit einer Maschine die Position und Orientierung eines Endeffektors oder einer Werkzeugaufnahme von besonderem Interesse. Daher sieht eine Ausführungsform der Erfindung vor, dass der bestimmte Punkt zumindest näherungsweise im Bereich des Endeffektors bzw. der Werkzeugaufnahme der Fertigungsmaschine festgelegt wird. So kann auch für diesen besonderen Teil der Maschine die entsprechende Bahn ermittelt und ein oder mehrere damit im Zusammenhang stehende Maschinenparameter nachjustiert werden. Besonders vorteilhaft kann auch die Bahn der Spitze eines an dem Endeffektor angebrachten Werkzeuges, der sog. Tool Center Point (TCP) nachverfolgt werden.

Die erfindungsgemäße Vorgehensweise zeichnet sich insbesondere dadurch aus, dass ein Bediener der Maschine lediglich ein bestimmtes Kommando zum Start der Kalibrierung geben muss, zum Beispiel eine entsprechende Eingabe auf einem HMI der Steuerung, und die Kalibrierung anschließend zumindest weitgehend automatisch erfolgen kann. Insbesondere sind bei einer bevorzugten Ausführungsform der Erfindung keine Programme oder manuellen Eingaben erforderlich, um mit der Maschine bestimmte Referenzpunkte anzufahren. Vorteilhaft werden nach einem Start-Befehl alle an der Positionierung eines Endeffektors bzw. einer Werkzeugaufnahme beteiligten Achsen vorzugsweise nacheinander einzeln angesteuert und bezüglich eines zur Kalibrierung vorgesehenen Verfahrbereiches, insbesondere bezüglich eines relevanten Bereiches ihres maximalen Verfahrbereiches, verstellt. Dabei wird jeweils die Bahn wenigstens eines Punktes, der einem durch das Verfahren der Achse bewegten Maschinenelement zugeordnet ist, ermittelt und analysiert, insbesondere mit einer idealen Bahn verglichen bzw. werden die Abweichungen zwischen der gemessenen und der idealen Bahn bestimmt. Die einzelnen Achsen werden vorzugsweise in der durch die kinematische Kette der betreffenden Maschine vorgegebenen Reihenfolge nacheinander verfahren. Prinzipiell können sie jedoch auch in beliebiger Reihenfolge einzeln nacheinander oder jeweils mehrerer Achsen in vorgegebener oder vorgebbarer Kombination gleichzeitig verfahren werden.

Da die Verfahrwege der einzelnen Achsen bereits vor Beginn der Kalibrierung festlegbar sind, ist zur Durchführung eines erfindungsgemäßen Kalibrierverfahrens lediglich der Aufruf einer in der Steuereinrichtung hinterlegten Kalibrier-Software mittels einer Start-Anweisung, insbesondere durch eine manuelle Eingabe eines Bedieners, erforderlich. Insbesondere müssen nicht durch den Bediener Referenzpunkte oder Referenzbahnen vorgegeben werden, die von der Maschine im Zuge der Kalibrierung anzufahren sind.

Das Verfahren der Achsen gemäß der Reihenfolge in der kinematischen Kette, beginnend mit der der Basis am nächsten liegenden Achse, hat den Vorteil, dass alle in der kinematischen Kette vor einer bestimmten Achse liegenden Achsen bereits kalibriert sind, wenn die betreffende Achse verfahren wird. Mögliche Fehler der vorherigen Achsen wurden daher bereits korrigiert, sodass deren ursprüngliche Abweichungen nicht mehr oder zumindest nicht mehr in dem sonst erhaltenen Maß in die aus dem Verstellen der aktuellen Achse bestimmten Abweichungen eingehen.

Vorzugsweise werden im Zusammenhang mit der erfindungsgemäßen Kalibrierung alle Achsen bezüglich ihres maximalen Verfahrweges verfahren. Die betreffende Achse fährt demnach zunächst die Position mit der minimalen oder maximalen Auslenkung an und bewegt sich anschließend in die Position der maximalen bzw. minimalen Auslenkung, wobei währenddessen die Bahn eines ausgewählten Punktes bestimmt wird. Bei einer endlos verstellbaren Rundachse können diese Endlagen beispielsweise die definierten Winkellagen 0° und 360° sein.

Bei einer bevorzugten Ausführungsform der Erfindung ist der für die Kalibrierung der Maschine vorgesehene "Verfahrbereich zur Kalibrierung" der Achsen jeweils derart bestimmt, dass keine unerwünschten Kollisionen zwischen Komponenten der Fertigungsmaschine auftreten. Der Verfahrbereich zur Kalibrierung kann für ein bestimmte Achse daher auch von den aktuellen Achsstellungen weiterer Achsen der Fertigungsmaschine abhängen.

Besonders vorteilhaft verfügt die betreffende Fertigungsmaschine über eine automatische Kollisionserkennung, die Kollisionen rechtzeitig vor deren Eintreten erkennt und verhindert. Der für die Kalibrierung vorgesehene Verfahrweg einer bestimmten Achse wird so automatisch und dynamisch durch die Steuereinrichtung an die jeweilige Situation angepasst.

Eine alternative Lösung sieht vor, dass der in Bezug auf die erfindungsgemäße Kalibrierung vorgesehene Verfahrweg der betreffenden Achsen einmalig bestimmt und in der Steuerung hinterlegt wird. Er wird insbesondere für alle Achsen derart bestimmt, dass Kollisionen von vornherein ausgeschlossen werden können.

Eine Ausführungsform der Erfindung sieht vor, dass vor dem Verfahren einer bestimmten Achse im Zuge der Kalibrierung zumindest eine, vorzugsweise alle übrigen Achsen in eine vorbestimmte Ausgangsstellung, z.B. eine Mittelstellung (Mitte zwischen maximalem und minimalem Achswert), gebracht werden. Die Ausgangsstellung der übrigen Achsen zeichnet sich insbesondere dadurch aus, dass beim Verfahren der bestimmten Achse keine Kollisionen auftreten. Die Ausgangsstellung einer bestimmten Achse kann für den Zeitraum des Kalibrierverfahrens, in dem diese Achse nicht selbst verfahren wird, unverändert beibehalten werden. Die Ausgangsstellung einer bestimmten Achse kann jedoch auch von der Achse abhängen, die gerade verfahren wird. Über den gesamten Kalibriervorgang betrachtet kann eine bestimmte Achse also mehrere vorbestimmte Ausgangstellungen aufweisen. Insbesondere ist es so möglich, dass während eine erste Achse zur Aufzeichnung der Bahn des betreffenden Punktes verfahren wird, gleichzeitig wenigstens eine andere, insbesondere in der kinematischen Kette nachfolgende Achse ebenfalls verfahren wird zu dem Zweck, eine mögliche Kollision zu vermeiden. Vorteilhaft kann dadurch gegebenenfalls der für die erste Achse vorgesehene Verfahrbereich zur Kalibrierung vergrößert werden.

Einerseits führt die Aufzeichnung und Auswertung des maximal möglichen Verfahrweges insgesamt zu einer höheren Genauigkeit bei der Kalibrierung. Andererseits vereinfacht sich ggf. durch diese Maßgabe der Aufwand für den Benutzer. Die Endlagen der verstellbaren Achsen sind bei Fertigungsmaschinen nach deren Inbetriebnahme ohnehin bekannt und in der Steuerung bereits hinterlegt.

Soll im Zusammenhang mit der Erfindung zumindest für eine Achse ein gegenüber dem maximalen Verfahrbereich verkleinerter Verfahrbereich zur Kalibrierung bestimmt werden, so können auch für die Kalibrierung durch einen einmaligen Einstellvorgang entsprechende Endlagen für diese Achse bestimmt und in der Steuereinrichtung hinterlegt werden. Diese Endlagen bestimmen sodann den maximalen Verfahrbereich zur Kalibrierung für die betreffende Achse. Unter der Maßgabe, dass stets der - durch die jeweiligen Endlagen vorgegebene - Verfahrbereich zur Kalibrierung verfahren werden soll, braucht sich der Benutzer keine Gedanken diesbezüglich zu machen. Gegebenenfalls beschränkt sich der Aufwand des Benutzers zur Durchführung der Kalibrierung lediglich auf das Ausführen des entsprechenden Start-Befehls. Der Ablauf erfolgt dann ohne weitere Vorgaben durch den Benutzer automatisch. Der Aufwand für den Benutzer ist daher auf ein Minimum beschränkt. Insbesondere erfolgt die Kalibrierung so ohne die Vorgabe eines Bewegungsprogramms bzw. anzufahrender Referenzpunkte.

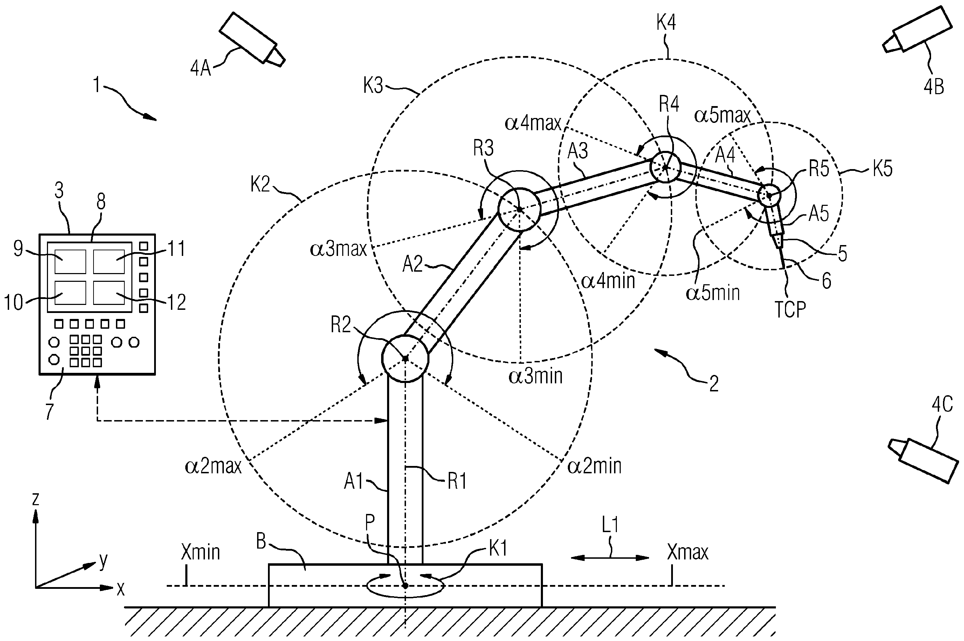

Die Erfindung wird nachfolgend anhand eines Ausführungsbeispiels exemplarisch näher beschrieben und erläutert. Dabei zeigt die Figur ein erfindungsgemäßes Fertigungsmaschinensystem. Weiterhin wird anhand der Figur auch das erfindungsgemäße Verfahren erläutert.

Die Figur zeigt ein Fertigungsmaschinensystem in Form eines Robotersystems 1. Das Robotersystem 1 umfasst eine Fertigungsmaschine in Form eines Gelenkarmroboters 2, der mittels einer damit verbundenen Steuereinrichtung in Form einer CNC-Steuerung 3 gesteuert wird. Weiterhin umfasst das Robotersystem 1 mehrere Laser-Tracker 4A bis 4C, mittels derer die Positionen markanter Punkte des Roboters 2 exakt im dreidimensionalen Raum bestimmt und während der Bewegung des Roboters 2 nachverfolgt werden können.

Weiterhin umfasst das Robotersystem 1 mehrere auf der CNC-Steuerung 3 lauffähige Software-Applikationen (Apps), die bei Bedarf ausgeführt werden können.

Zur Steuerung und exakten Positionierung des Roboters 1 ist in der CNC-Steuerung 3 ein Modell des Roboters 2 in Form von Modell-Parametern 9 hinterlegt. Durch die Modell-Parameter 9 ist die Kinematik des Roboters 2 exakt beschreibbar. Insbesondere gehen aus den Modell-Parametern 9 die Anzahl der Achsen des Roboters, die Orientierung der Achsen relativ zueinander sowie die exakten geometrischen Abmessungen wesentlicher Komponenten des Roboters 2 und die Abstände zwischen benachbarten Achsen (Achsabstände) hervor.

Der Roboter 2 gemäß dem Ausführungsbeispiel umfasst eine Linearachse L1, mittels der eine Basis B bezüglich eines kartesischen Koordinatensystems x, y, z in x-Richtung zwischen den Punkten xₘᵢₙ und xₘₐₓ verfahren werden kann.

Der Roboter 2 umfasst neben der Basis B einen mit der Basis B drehbar verbundenen Roboterarm mit den Armgliedern A1 bis A5. Zwischen zwei benachbarten Armgliedern befindet sich jeweils ein Gelenk, mittels dessen jeweils eines der (Arm-) Glieder bezüglich des jeweils anderen schwenkbar ist. Im Ausführungsbeispiel sind die Gelenke durch die horizontal ausgerichteten Rundachsen R2 bis R5 dargestellt.

Ferner umfasst der Roboter 2 eine Rundachse R1, die vertikal, d. h. parallel zur z-Achse ausgerichtet ist und um die der Roboterarm um einen beliebigen Winkel schwenkbar ist. D. h., bei der Rundachse R1 können beliebige Winkel von 0° bis 360° eingestellt werden. Prinzipiell ist der Roboterarm endlos um R1 rotierbar.

Die Linearachse L1 und die Rundachsen R1 bis R5 bilden eine kinematische Kette. Dadurch werden insbesondere durch das Verstellen einer Achse die Antriebe der in der Kette nachfolgenden Achsen bezüglich ihrer Position und/oder Orientierung im Raum verändert, ohne dabei selbst verstellt bzw. verfahren zu werden.

Die Modell-Parameter 9 des Roboters 2 werden zum Beispiel bei der Inbetriebnahme erfasst. Sie umfassen die geometrischen Abmessungen relevanter Roboter-Komponenten, insbesondere die Längen der Armglieder A1 bis A5 und die Abstände benachbarter Rundachsen. Auch die Position und Orientierung der Achsen relativ zueinander ist von den Modell-Parametern umfasst.

Weiterhin werden bei der Inbetriebnahme auch die minimalen und maximalen Achspositionen xₘᵢₙ und xₘₐₓ der Linearachse L1 bzw. die minimalen und maximalen Achsenwinkel α2ₘᵢₙ, α2ₘₐₓ, ... α5ₘᵢₙ, α5ₘₐₓ für die Rundachsen R2 bis R5 festgelegt.

Die so festgelegten minimalen und maximalen Achspositionen xₘᵢₙ und xₘₐₓ der Linearachse L1 bzw. die minimalen und maximalen Achsenwinkel α2ₘᵢₙ, α2ₘₐₓ, ... für die Rundachsen R2 bis R5 legen jeweils den maximalen Verfahrbereich (Verfahrweg) für die betreffende Achse fest.

In Bezug auf das erfindungsgemäße Kalibrierverfahren können bei dem Roboter 2 neben den minimalen und maximalen Achswerten (Achspositionen bzw. Achswinkeln) auch minimale und maximale Achswerte für die Kalibrierung vorgegeben werden. Damit kann für die betreffende Achse ein kleinerer Verfahrbereich als der maximale Verfahrbereich speziell zur Kalibriervorgang, das heißt für den Kalibrier-Vorgang, festgelegt werden. Vorzugsweise werden die Achsen zur Kalibrierung jedoch über ihren maximalen Verfahrbereich verfahren, insbesondere wenn Kollisionen ausgeschlossen werden können.

Vorteilhaft erfolgt das erfindungsgemäße Kalibrierverfahren weitestgehend automatisch. Gemäß einer bevorzugten Ausführungsform muss ein Bediener der CNC-Steuerung 3 lediglich in Verbindung mit Bedienelementen 7 sowie einem Display 8 eine entsprechende Kalibrier-Applikation (nicht dargestellt) startet. Dadurch werden die nachfolgend beschriebenen Verfahrensschritte ausgelöst:
In einem ersten Verfahrensschritt wird für die Linearachse L1 ein Verfahrbereich zur Kalibrierung bestimmt. Wie der Figur zu entnehmen ist, können durch das Verfahren der Linearachse L1 bedingte Kollisionen zwischen Maschinenelementen ausgeschlossen werden. Der Verfahrbereich zur Kalibrierung wird für die Linearachse L1 daher als der ersichtliche Bereich zwischen einer Anfangsposition xₘᵢₙ und einer Endposition xₘₐₓ festgelegt.

In einem zweiten Verfahrensschritt wird die Linearachsen L1 ausgehend von der Anfangsposition xₘᵢₙ mit vorgegebener Geschwindigkeit bis zu der Endposition xₘₐₓ verfahren. Dabei wird in einem dritten Verfahrensschritt mit wenigstens einem der Laser-Tracker (Tracking-Interferometer) 4A bis 4C die Lage des Punktes P bzw. zusätzlich oder alternativ die Lage des Punktes R2 während der Bewegung aufgezeichnet. Idealerweise bewegen sich der Punkt P bzw. der Punkt R2 entlang einer Geraden, die parallel zur X-Achse ausgerichtet ist.

Die von den Laser-Trackern 4A bis 4C aufgezeichneten Punkte werden in einem vierten Verfahrensschritt einer in der CNC-Steuerung 3 ablaufenden Laser-Tracker App 10 zugeführt und analysiert. Die Laser-Tracker App 10 vergleicht insbesondere die durch die Laser-Tracker 4A bis 4C im 3-dimensionalen Raum ermittelten Bewegungsbahnen (Bahnen) der Punkte P und R2 mit idealen Bahnen für die ausgeführte Bewegung. Aus den Abweichungen zwischen den aufgezeichneten Bahnen und den idealen Bahnen werden schließlich in einem fünften Verfahrensschritt Korrekturwerte für die in der CNC-Steuerung 3 hinterlegten Modell-Parameter 9 des Roboters 2 bestimmt. Die Korrekturwerte können beispielsweise die Orientierung der Achse L1 im Raum betreffen, die möglicherweise nicht exakt parallel zu der x-Achse des Basis-Koordinatensystems x, y, z ausgerichtet ist, oder es kann sich aus den Messwerten ein anderer Abstand zwischen den Punkten P und R2 ergeben als der ursprünglich dafür in der Steuerung 3 hinterlegte.

Analog zu der Vorgehensweise bezüglich der Linearachse L1 wird nachfolgend nacheinander auch für die Rundachsen R1 bis R5 vorgegangen. Zunächst wird jeweils für die betreffende Achse ein Verfahrbereich zur Kalibrierung bestimmt und die Achse gemäß dem jeweiligen Verfahrbereich zur Kalibrierung verfahren. Während der Verfahrbewegungen werden jeweils die Bahnen vorbestimmter, markanter Punkte aufgezeichnet, mit idealen Bahnen verglichen und daraus Korrekturwerte bzw. korrigierte Werte für in den Steuerung 3 hinterlegten Modell-Parameter des in der Steuerung 3 hinterlegten Roboter-Modells abgeleitet.

Bezüglich möglicher Verfahrbereiche zur Kalibrierung der einzelnen Achsen L1, R1 bis R5 des Roboters 2 stehen verschiedene Optionen zur Auswahl.

Vorteilhaft werden im Zuge der Kalibrierung bestimmte oder alle Achsen entlang ihres maximalen Verfahrweges verfahren und die resultierenden Bewegungen erfasst.

Es ist jedoch auch möglich, dass zumindest für bestimmte Achsen nicht der maximal mögliche Verfahrweg, sondern zur Kalibrierung ein spezieller, eingeschränkter Verfahrbereich zur Kalibrierung vorgegeben wird.

Dieser eingeschränkte Verfahrbereich zur Kalibrierung kann für die jeweilige Achse bereits vor Beginn des Kalibriervorgangs festgelegt und durch entsprechende Parameter in der CNC-Steuerung 3 hinterlegt werden. Insbesondere kann so durch die Vorgabe entsprechender Anfangs- und Endwerte jeweils eigens ein maximaler Verfahrweg für die Kalibrierung vorgegeben werden. Beispielsweise könnte dies für die Achse L1 der Bereich zwischen Punkten x_{k,min} und x_{k,max} (nicht dargestellt) oder für die Rundachse R2 der Winkelbereich zwischen den Achsenwinkel α2_{k,min}, α2_{k,max}, (nicht dargestellt) sein.

Ein gegenüber dem maximalen Verfahrbereich einer Achse eingeschränkter Verfahrbereich zur Kalibrierung kann sich auch dadurch ergeben, dass die Steuerung 3 über Mittel zur automatischen Kollisionsvermeidung verfügt, durch die Kollisionen rechtzeitig erkannt werden, bevor diese eintreten. Der maximale Verfahrbereich zur Kalibrierung für eine bestimmte Achse kann dadurch automatisch für die Kalibrierung auf einen maximal möglichen, kollisionsfreien Verfahrweg für diese Achse eingeschränkt werden.

Mögliche Kollisionen hängen in der Regel von den Achsstellungen aller oder zumindest mehrerer Achsen des Roboters 2 ab. Umgekehrt kann eine durch die Bewegung einer Achse verursachte Kollision häufig dadurch verhindert werden, dass andere Achsen - vor oder während der Bewegung der einen Achse - so positioniert werden, dass eben keine Kollision auftritt. Im Ausführungsbeispiel könnte so während die Rundachse R2 von α2ₘᵢₙ nach α2ₘₐₓ verfahren wird gleichzeitig die Achse R3 von α3ₘₐₓ nach α3ₘᵢₙ verfahren werden.

Eine andere Ausführungsform der Erfindung sieht vor, dass vor dem Verfahren einer bestimmten Achse im Zuge der erfindungsgemäßen Kalibrierung alle übrigen Achsen in eine vorbestimmte Position gebracht werden, beispielsweise eine "Mittelstellung", womit Kollisionen verhindert werden.

Bei einer bevorzugten Ausführungsform der Erfindung werden beim Verfahren einer bestimmten Achse alle übrigen Achsen vor oder während der Bewegung der einen Achse automatisch so positioniert, dass keine Kollisionen auftreten. Damit kann der gesamte Kalibriervorgang - abgesehen von einem manuellen Start - automatisch ablaufen.

Bei einer bevorzugten Ausführungsform der Erfindung werden alle an der Bewegung des Endeffektors des Roboters 2 in Form des Werkzeugs 6 beteiligten Achsen L1, R1 bis R5 in der genannten Reihenfolge nacheinander wenigstens einmal, insbesondere entlang ihres maximalen Verfahrweges bzw. ihres für die Kalibrierung festgelegten, maximalen Verfahrweges zur Kalibrierung verfahren. Die Rotation der Achse R1 führt dabei zu einer Kreisbewegung (nicht dargestellt) der Armglieder A1 bis A5 sowie der Werkzeugaufnahme 5 und des Werkzeugs 6 um diese Rotationsachse R1. Hier bietet es sich an, die Bewegungsbahnen (idealerweise Kreisbahnen) der aus der Figur ersichtlichen Punkte R2 bis R5 und des TCP (Tool Center Point) zu erfassen und zu analysieren. Vorteilhaft rotiert die Achse R1 dabei von einer Winkelstellung 0° um 360° bis zu der Winkelstellung 360°.

Nachfolgend wird das Armglied A2 um die Rotationsachse R2 geschwenkt. R2 bezeichnet hier der Übersichtlichkeit halber sowohl die in y-Richtung, also in die Zeichenebene hinein verlaufende Rundachse R2 als auch den aus der Zeichnung ersichtlichen Punkt R2 auf dieser Achse. Der Punkt R2 kennzeichnet zum Beispiel den außen am Roboterarm sichtbaren Mittelpunkt der Lagerung des Gelenks zwischen den Armgliedern A1 und A2. R2 kann eine von sich aus markante und von anderen Punkten unterscheidbare Stelle des Roboterarms sein, der Punkt R2 kann jedoch auch eine eigens für die Kalibrierung am Roboterarm angebrachte Markierung sein, die insbesondere von den Laser-Trackern 4A bis 4C leicht erkannt und geortet werden kann.

Die Ausführungen bezüglich der Bewegung der Rundachse R2 bzw. der Aufzeichnung der Bahn des Punktes R2 gelten analog auch für die Rundachsen R3 bis R5 und die zugehörigen, aus der Figur ersichtlichen Punkte R3 bis R5.

Bei der Schwenkbewegung des Armgliedes A2 um die Rundachse R2 wird die Rundachse R2 (soll heißen der betreffende Antrieb) von einer Anfangs-Winkelstellung α2ₘᵢₙ zu einer End-Winkelstellung α2ₘₐₓ verstellt, das heißt bewegt bzw. verfahren. Dabei bewegt sich der Punkt R3 idealerweise auf einer Kreisbahn K2 um R2. Die Bewegung des Punktes R3 entlang des betreffenden Kreisbogens wird von den Laser-Trackern 4A bis 4C erfasst und der CNC-Steuerung 3 zugeführt. Der gefahrene Orbit liegt dann als Menge an Messpunkten in der CNC-Steuerung 3 vor und kann mittels der CNC-Steuerung 3, insbesondere durch in der CNC-Steuerung vorhandene Analysemittel in Form einer Analyse-App analysiert werden.

Anhand der Abweichungen des gemessenen Kreisbogens von K2 von dem zugehörigen idealen Kreisbogen können Rückschlüsse auf Modell-Parameter des Roboters 2 gezogen werden. Beispielsweise können so Abweichungen der Lage und Orientierung der Achse R2 bezüglich des Basis-Koordinatensystems x, y, z oder Abweichungen des Abstandes zwischen den Punkten R2 und R3 erkannt werden. Die dazu in dem Roboter-Modell in der CNC-Steuerung 3 hinterlegten Modell-Parameter können so korrigiert werden.

Insbesondere beschreibt die Rotationsbewegung des Punktes R2 einen Orbit, der theoretisch ein idealer Kreis ist. Die gemessene Bahn kann durch mathematische Verfahren analysiert werden, z. B. das least-squares-fit-Verfahren. Aus den Abweichungen lassen sich einzelne Abweichungen bzw. Fehler bestimmter Modell-Parameter gezielt ermitteln und korrigieren:
- Liegt beispielsweise der Mittelpunkt des gemessenen Kreises nicht an dem dafür vorgesehenen Punkt, so kann dies durch einen Offset der Achsen korrigiert werden.
- Ist beispielsweise der Radius des gemessenen Kreises größer oder kleiner als erwartet, so kann die entsprechende Armlänge korrigiert werden.
- Liegt die ermittelte Kreisebene in einem Winkel zu der erwarteten (idealen) Kreisebene, so deutet dies auf eine nicht ideale Einbaulage des betreffenden Gelenks hin. Auch diesbezüglich können Korrektur-Offsets ermittelt werden.

Von dem oben beispielhaft aufgezeigten Kalibriervorgang kann im Rahmen der Erfindung in vielfältiger Weise abgewichen werden. So können die Achsen L, R1 bis R5 in einer anderen, prinzipiell in beliebiger Reihenfolge verfahren werden. Auch ist es möglich, dass mehrere Achsen gleichzeitig verfahren und die Bahnen markanter Punkte aufgezeichnet werden. Auch können beim Verfahren wenigstens einer Achse gleichzeitig die Bahnen mehrerer Punkte aufgezeichnet und anschließend analysiert werden. Insbesondere können auch mehrere Punkte, die ein bestimmtes Gelenk betreffen, gleichzeitig aufgezeichnet werden, z.B. die beiden Endpunkte einer Gelenkwelle. Weiterhin können die einzelnen Achsen in beliebiger Richtung und auch mehrfach hintereinander verfahren werden. Ferner ist es auch möglich, dass einzelne Achsen nicht über ihren maximal möglichen Verfahrbereich, sondern nur über einen Teilbereich des maximal möglichen Verfahrbereiches verfahren werden. Darüber hinaus können während des Kalibrierverfahrens auch bestimmte Achsen nacheinander mehrere vorbestimmte Achsstellungen einnehmen und andere Achsen werden nachfolgend entlang ihres im Rahmen der Kalibrierung vorgesehenen Verfahrweges verfahren. Beispielsweise kann die Achse R1 zunächst wie in der Figur gezeigt so ausgerichtet sein, dass die Rundachsen R2 bis R4 in die Zeichenebene hinein, also in y-Richtung orientiert sind. Anschließend wird die Rundachse um 90° geschwenkt, so dass die Rundachsen R2 bis R5 in x-Richtung orientiert sind, und der Kalibriervorgang wird (bezüglich der übrigen Achsen R2 bis R5) für diese Achsstellung der Rundachse R1 wiederholt.

Die obige Aufzählung zeigt nur einige wenige Möglichkeiten, um die das erfindungsgemäße Kalibrierverfahren erweitert bzw. ergänzt werden kann. Diese Aufzählung ist daher nicht abschließend zu verstehen und kann um eine Vielzahl weiterer Varianten ergänzt werden, ohne den Schutzbereich der Erfindung zu verlassen.

Neben der Ermittlung bzw. Korrektur der reinen GeometrieParameter des Roboters 2 können in einer weiteren Ausprägung der Erfindung auch andere mechanische Effekte ermittelt und entsprechende Modell-Parameter korrigiert werden. Z. B. führt der Durchhang einer elastischen Mechanik aufgrund von Schwerkraft zu entsprechend verformten Kreisen. Aus der Art der Verformung und dem Maß der Abweichung vom Sollkreis kann auf Steifigkeiten in den Achsen und Gelenken geschlossen werden.

Ein besonderer Vorteil der Erfindung liegt darin begründet, dass durch einen einmaligen Aufruf bzw. Start der Kalibrierung an der Steuerung 3 diese für den Roboter 2 weitgehend automatisch, das heißt ohne weitere Eingriffe durch einen Bediener erfolgen kann. Insbesondere muss für die Kalibrierung nicht eine Vielzahl an Referenzpunkten angefahren und ausgewertet werden. Dadurch vereinfacht sich sowohl der Aufwand für den Benutzer als auch der Aufwand bei der Erstellung einer entsprechenden Kalibrier-Software und damit bei der Programmierung des Roboters 2.

Insbesondere kann die Kalibrier-Software so programmiert sein, dass sie auf einer Vielzahl unterschiedlicher Steuerungen, die jeweils unterschiedliche Fertigungsmaschinen steuern, lauffähig ist. Vorteilhaft sind dabei nach der Installation und dem Aufruf der Kalibrier-Software keine weiteren manuellen Bedienhandlungen erforderlich. Die Kalibrier-Software zieht sich die zur Kalibrierung der betreffenden Fertigungsmaschine notwendigen Daten (Anzahl, Lage und Ausrichtung der Achsen, Verfahrbereiche etc.) jeweils selbsttätig aus der betreffenden Steuerung.

## Patentansprüche

1. Fertigungsmaschinensystem, umfassend:
- eine Fertigungsmaschine, aufweisend wenigstens einen ersten lagegeregelten Antrieb, durch den wenigstens ein erstes Maschinenelement relativ zu einem weiteren Maschinenelement bezüglich einer Achse verstellbar ist,
- eine Steuereinrichtung zum Steuern des lagegeregelten Antriebs zum Bewegen des ersten Maschinenelements relativ zu dem weiteren Maschinenelement,
- ein in der Steuereinrichtung hinterlegtes Modell des ersten Maschinenelements, welches wenigstens einen Modell-Parameter des ersten Maschinenelements umfasst,
- Messmittel zum Bestimmen einer Bahn, die ein bestimmter, dem ersten Maschinenelement zugeordneter Punkt (P, TCP) während einer Bewegung des ersten Maschinenelements beschreibt,
- Analysemittel zum Analysieren der bestimmten Bahn,
- Korrekturmittel zum Korrigieren des Modell-Parameters anhand des Analyse-Ergebnisses.

2. Fertigungsmaschinensystem nach Anspruch 1, wobei die Achse eine Linearachse (L1) ist und wenigstens näherungsweise die Bewegung eine lineare Bewegung bzw. die Bahn eine Gerade ist.

3. Fertigungsmaschinensystem nach Anspruch 1, wobei die Achse eine Rundachse (R1 bis R5) ist und wenigstens näherungsweise die Bewegung eine Kreisbewegung bzw. die Bahn eine Kreisbahn (K2 bis K5) ist.

4. Fertigungsmaschinensystem nach einem der vorherigen Ansprüche, wobei das Messmittel ein Tracking-Interferometer umfasst.

5. Fertigungsmaschinensystem nach einem der vorherigen Ansprüche, wobei der Antrieb zum Bestimmen der Bahn zumindest über einen wesentlichen Teil eines maximalen Verfahrbereiches des Antriebs verfahren wird.

6. Fertigungsmaschinensystem nach einem der vorherigen Ansprüche, wobei die Fertigungsmaschine mehrere Antriebe umfasst, die jeweils durch wenigstens ein Maschinenelement voneinander getrennt sind, wobei die Antriebe und Maschinenelemente eine kinematische Kette bilden.

7. Fertigungsmaschinensystem nach Anspruch 6, wobei der bestimmte Punkt (P, TCP) zumindest näherungsweise auf einer Achse eines in der kinematischen Kette nachfolgenden Antriebs festlegbar ist.

8. Fertigungsmaschinensystem nach Anspruch 6 oder 7, wobei die Messung ausgehend von einer Basis (B) entlang der kinematischen Kette nacheinander für alle Antriebe erfolgt.

9. Fertigungsmaschinensystem nach einem der vorherigen Ansprüche, wobei der bestimmte Punkt (P, TCP) zumindest näherungsweise im Bereich eines Endeffektors oder einer Werkzeugaufnahme der Fertigungsmaschine festlegbar ist.

10. Fertigungsmaschine für ein Fertigungsmaschinensystem, ausgebildet als Werkzeugmaschine.

11. Fertigungsmaschine für ein Fertigungsmaschinensystem, ausgebildet als Roboter (2).

12. Steuereinrichtung für ein Fertigungsmaschinensystem nach einem der Ansprüche 1 bis 11.

13. Verfahren zum Kalibrieren einer Fertigungsmaschine eines Fertigungsmaschinensystems, wobei mittels einer von dem Fertigungsmaschinensystem umfassten Steuereinrichtung folgende Schritte ausgeführt werden:
- Ermitteln einer zur Bewegung eines Endeffektors vorgesehenen Achse der Fertigungsmaschine,
- Ermitteln eines Verfahrbereiches zur Kalibrierung für die ermittelte Achse,
- Verfahren der Achse entlang des ermittelten Verfahrbereiches zur Kalibrierung,
- Ermitteln und Analysieren einer Bahn wenigstens eines Punktes (P, TCP), der einem durch das Verfahren der Achse bewegten Maschinenelement zugeordnet ist,
- Korrigieren eines Modell-Parameters für das Maschinenelement in Abhängigkeit eines Ergebnisses der Analyse für ein in der Steuerung hinterlegtes Modell der Fertigungsmaschine.

14. Verfahren nach Anspruch 13, wobei das Verfahren für mehrere, insbesondere alle an der Bewegung des Endeffektors beteiligten Achsen durchgeführt wird.

15. Verfahren nach Anspruch 14, wobei die Achsen einzeln nacheinander verfahren werden.

16. Verfahren nach Anspruch 15, wobei die Achsen ausgehend von einer ortsfesten Basis der Fertigungsmaschine nacheinander in einer Reihenfolge entlang einer kinematischen Kette verfahren werden.

17. Verfahren nach einem der Ansprüche 13 bis 16, wobei das Analysieren einen Vergleich der ermittelten Bahn mit einer idealen Bahn umfasst.

18. Kalibrier-Software, welche auf einem Speichermedium speicherbar und auf einer Steuereinrichtung zur Steuerung einer Fertigungsmaschine eines Fertigungsmaschinensystem installierbar und infolge einer Start-Anweisung auf der Steuereinrichtung ausführbar ist zur Durchführung eines Verfahrens nach einem der Ansprüche 13 bis 17.
